# EUROPÄISCHE PATENTSCHRIFT

(11) **EP 0 750 558 B1**
(45) Veröffentlichungstag und Bekanntmachung des Hinweises auf die Patenterteilung: **02.09.1998**
(21) Anmeldenummer: 95912375.3
(22) Anmeldetag: 17.03.1995
(51) Int. Cl.: B62M 1/02

(54) **ALTERNIERENDER ANTRIEB FÜR FAHRRÄDER**
ALTERNATING DRIVE FOR WHEELED VEHICLES
ENTRAINEMENT ALTERNATIF POUR VEHICULES A ROUES

(30) Priorität: 17.03.1994 HU 9400785
(43) Veröffentlichungstag der Anmeldung: 02.01.1997
(73) Patentinhaber: RACZ, Gábor, 1024 Budapest (HU); LANTOS, Mihaly, 1022 Budapest (HU); KOHLHEB, Robert, 1015 Budapest (HU); VONHAUSER, Oliver, 2000 Szentendre (HU)
(72) Erfinder: RACZ, Gábor, 1024 Budapest (HU); KABOLDY, Attila, 1148 Budapest (HU); KOHLHEB, Robert, 1015 Budapest (HU); VONHAUSER, Oliver, 2000 Szentendre (HU)
(74) Vertreter: Viering, Jentschura & Partner
(86) Internationale Anmeldenummer: HU9500006
(87) Internationale Veröffentlichungsnummer: WO9525035

(56) Entgegenhaltungen:
- DE-A- 2 758 795
- DE-C- 83 772
- DE-C- 374 070
- FR-E- 46 969
- US-A- 609 498

## Beschreibung

Die Erfindung betrifft einen alternierenden Antrieb für Fahrräder gemäß dem Oberbegriff des Anspruchs 1. In der vorliegenden Beschreibung wird unter dem Ausdruck "Fahrrad" nicht nur das herkömmliche, zwei Räder aufweisende Fahrzeug, das "Zweirad", verstanden, sondern jedes durch menschliche Kraft angetriebenes Fahrzeug, dessen Räder von der transportierten Person mit Hilfe der Pedale über eine mechanische Übersetzung angetrieben werden. Zu diesen Fahrzeugen gehört zum Beispiel auch das Dreirad.

Bei dem verbreitetsten Typ der Fahrräder mit Pedalantrieb wird mit dem Pedal ein Kettenrad gedreht, und die auf dem Kettenrad aufliegende Kette ist über ein auf der Achse des angetriebenen Rades, im allgemeinen des Hinterrades, befindliches Kettenrad geführt und treibt dieses an. Das Kettenrad steht mit dem angetriebenen Rad über einen Freilaufmechanismus in Verbindung. Die Übersetzung zwischen Pedal und angetriebenem Rad kann in vielen Fällen durch eine Gangschaltung in diskreten Stufen geändert werden. Die Funktion der Gangschaltung beruht darauf, daß die Kette über verschiedene Kettenräder geführt werden kann. Bei diesem Mechanismus können Gänge nur geschaltet werden, wenn die Kette läuft, d.h. das Fahrrad angetrieben wird, obwohl das Schalten der Gänge auch bei stehendem Fahrrad erforderlich sein kann.

Unter alternierendem Antrieb wird hier ein von dem herkömmlichen Kettenradantrieb abweichender Antrieb verstanden, bei dem die Zugkraft von zwei in einander entgegengesetzter Richtung bewegten Zugelementen auf das angetriebene Rad wirkt. Ein derartiger alternierender Antrieb ist zum Beispiel in EP 0 210 336 A2 beschrieben; der Radfahrer tritt zwei sich auf- und abwärts bewegende Pedale. An beiden Seiten der Nabe des Hinterrades befindet sich je ein mit einem Kettenrad versehener Freilauf, und an einem Mittelabschnitt jedes Pedals sind die beiden Enden einer Kette befestigt. Die beiden Stücke der Kette stehen über eine richtungswechselnde, die Kettenräder aufnehmende Achse mit den beiden Kettenrädern der Freiläufe in Verbindung, und die die Kettenräder verlassenden Kettenstücke vereinigen sich bei einer Rolle. Die Übersetzung zwischen Pedal und angetriebenem Rad kann durch Verschieben der beiden Endpunkte der Kette entlang dem Pedal eingestellt werden.

Bei diesem Fahrradantrieb weichen die Bewegung des Radfahrers, seine Belastung und die Kennlinie seiner Bewegung wesentlich von den bei Benutzung eines mit auf einer Kreisbahn bewegten Pedalen ausgerüsteten Fahrrades auftretenden und bereits gewohnten Verhältnissen ab. Das Radfahren hat sehr starke Traditionen, deshalb werden Eingang in die Praxis nur Lösungen finden, bei denen die Beinbewegung des Radfahrers, die auf das Bein einwirkenden Kraftverhältnisse und die Bewegung des Fahrrades den gewohnten Verhältnissen sehr ähnlich sind.

Eine solche Lösung ist zum Beispiel der in letzter Zeit Verbreitung findende, in erster Linie bei Bergfahhrädern angewendete Antrieb mit "biopace"-Charakteristik, der ein Kettenradantrieb ist, jedoch das Kettenrad die Form eines abgerundeten Rhombus hat.

Aus der DE-A-2 758 795 ist ein alternierender Antrieb für Fahrräder gemäß dem Oberbegriff des Anspruchs 1 bekannt.

Durch die Erfindung wird ein alternierender Antrieb für Fahrräder gemäß dem Oberbegriff des Anspruchs 1 geschaffen, welcher eine günstige Geometrie erlaubt und welcher eine einfache und leichte Konstruktion aufweist.

Dies wird erfindungsgemäß mit den Merkmalen in dem kennzeichnenden Teil des Anspruchs 1 erreicht.

Der erfindungsgemäße alternierende Antrieb ermöglicht eine kompakte Konstruktion mit einer tief angeordneten Hilfsachse, so daß auch die Ziehelemente tief angeordnet werden können und den Radfahrer in seiner Bewegung nicht stören. Ferner wird über die um Seiltrommeln wickelbaren, biegsamen Ziehelemente eine leichte und einfache Konstruktion erreicht, welche keine Kette vorsieht. Der erfindungsgemäße Antrieb ermöglicht ferner einen sich aus der Kreisbewegung des Pedals ergebenden verringerten Totwinkelbereich sowie ein Ändern der Übersetzung im Stillstand.

Bei einer ersten Ausführungsform der Umwandlung der Kreisbewegung in eine Schwingbewegung sind die Schwingen über an ihren Enden gelenkig eingespannte Ziehstangen mit dem betreffenden Abschnitt des Pedals verbunden.

Dabei ergeben sich günstige geometrische Verhältnisse, wenn zwischen der Pedalachse und dem Pedal zwei starr aneinander befestigte, miteinander einen Winkel einschließende Stäbe vorgesehen sind und das eine Ende der Ziehstangen mit dem Verbindungspunkt der beiden Stäbe verbunden ist.

Die Kreisbewegung kann auch in eine Schwingbewegung umgewandelt werden, indem zwischen der Pedalachse und dem Pedal zwei mittels eines Achsenstumpfes starr miteinander verbundene, miteinander einen Winkel einschließende Stäbe vorgesehen sind, die Schwingen in ihrer Längsrichtung eine längliche innere Öffnung aufweisen und der die beiden Stäbe des Pedals verbindende Achsenstumpf unmittelbar oder über ein Lager in der inneren Öffnung geführt ist, was im wesentlichen eine Mitnehmer-Kulissenverbindung darstellt.

Bei einer dritten Ausführungsform der Umwandlung der Kreisbewegung in eine Schwingbewegung enthalten die Pedale Exzenterscheiben, und die Pedalachse führt durch diese hindurch, auf den Exzenterscheiben sind (auf jeder Scheibe eine) einander völlig gleiche, in Richtung der Schwingen zeigende, die Pedalachse excentrisch umgebende, in sich geschlossene, bezogen auf den Mittelpunkt der Pedalachse symmetrisch angeordnete Nuten ausgebildet, in die die Schwingen über je ein in die Nut eingepaßtes Führungselement eingreifen.

Bei dieser Ausführungsform ist es zweckmäßig, wenn das locker in die Nuten eingepaßte, das Führungselement bildende Lager an einem mittleren Teil der Schwingen befestigt ist.

Die Nuten haben bevorzugt eine Form, daß sie eine Kennlinie sichern, die der Charakteristik des Kettenradantriebes mit kreisförmigem oder abgerundet rhombusförmigem Ketenrad entspricht.

Bei jeder der erwähnten Ausführungsformen kann die Übersetzung stufenlos geändert werden, da an den Schwingen für das Ziehelement eine Befestigungsstelle ausgebildet ist, deren Entfernung von der Hilfsachse zwischen zwei Endstellungen eingestellt werden kann.

Zur Einstellung der beiden Befestigungsstellen wird zweckmäßig ein eine Schnur enthaltender Einstellmechanismus verwendet, wobei die Schnur mit der am Rahmen des Fahrrades befestigten Gangschaltung verbunden ist.

Die alternierende Bewegung der Schwinge wird auf die beiden hinteren Freiläufe vorzugsweise mittels einer Schnur übertragen, die nur einer Zugspannung ausgesetzt ist.

In diesem Falle sind die Freilaufmechanismen in Richtung des freien Laufes mit einer Spannkonstruktion versehen, die dafür sorgt, daß das Ziehelement im zweiten (keine Arbeit verrichtenden) Takt der Schwinge gespannt ist.

Die Freilaufmechanismen enthalten dabei zweckmäßig eine Trommel, in deren Inneren die zu der Spannkonstruktion gehörige Feder angeordnet ist und an deren die Schnur führendem Mantel der Endabschnitt des Ziehelementes aufgewickelt ist.

Die Schwingen und die beiden Freiläufe können auch miteinander verbunden sein, indem an die Schwingen starre hintere Ziehstangen angelenkt sind und je ein Punkt der Ziehstangen, der im Laufe der alternierenden Bewegung vor beziehungsweise hinter der Achse des Hinterrades liegt, mittels einer um die einzelnen Freilaufmechanismen geschlungenen Schnur mit diesen verbunden ist.

Bei dieser Lösung ist es vorteilhaft, wenn der äußere Mantel der Freilaufmechanismen als Seiltrommel ausgebildet ist, und an einem vor der Hinterachse befindlichen Punkt mittels einer Schnuraufnahmevorrichtung das eine Ende einer Zugschnur befestigt ist, deren anderes Ende mit der Seiltrommel in Verbindung steht, und in dem hinter der Hinterachse liegenden Befestigungspunkt eine schnurspannende Konstruktion vorgesehen ist, die das eine Ende einer Spannschnur hält, deren anderes Ende an der Seiltrommel befestigt ist.

Die erfindungsgemäße Lösung kann auch ohne Schwingen realisiert werden, dabei ist Änderung der Übersetzung aber schwieriger zu lösen. Bei dieser Ausführungsform enthalten die Pedale Exzenterscheiben, und die Pedalachse führt durch diese hindurch, auf den Exzenterscheiben ist je eine die Pedalachse excentrisch umgebende, in sich geschlossene, bezogen auf den Mittelpunkt der Pedalachse symmetrisch angeordnete Nut ausgebildet, in die Nuten greifen Führungselemente ein, an beiden Seiten der Achse des angetriebenen Rades des Fahrrades ist je ein Freilaufmechanismus angebracht, wobei die Verriegelungsrichtung der beiden Freiläufe entgegengesetzt ist, und die Freilaufmechanismen sind über voneinander unabhängige Ziehelemente mit den Führungselementen verbunden.

Der Aufbau des erfindungsgemäßen alternierenden Antriebes ist einfach, und obwohl er sich scheinbar wesentlich von den gewohnten Fahrradantrieben unterscheidet, vermittelt er infolge der auf Kreisbahnen bewegten Pedale ein ähnliches, fallweise angenehmeres Fahrgefühl. Die Übersetzung des Antriebs kann im stehen und im Fahren stufenlos geregelt werden.

Der alternierende Fahrradantrieb wird im folgenden an Ausführungsbeispielen mit Hilfe der Zeichnungen ausführlicher erläutert. In den Zeichnungen bedeuten
- Fig. 1: ein mit dem erfindungsgemäßen Antrieb ausgerüstetes Fahrrad in Seitenansicht;
- Fig. 2: zeigt einen vergrößerten Ausschnitt von Fig. 1;
- Fig. 3: zeigt die Pedalkonstruktion von der Seite; in
- Fig. 4: ist die Pedalkonstruktion von vorn, zum Teil geschnitten dargestellt;
- Fig. 5: zeigt den die beiden Schwingen und die Hilfsachse enthaltenden Teil in Draufsicht und halb geschnitten;
- Fig. 6: stellt eine vergrößerte Einzelheit von Fig. 5 im Schnitt dar;
- Fig. 7: stellt die Achse des angetriebenen Rades halb im Schnitt dar;
- Fig. 8: zeigt das Innere der Trommel 59, zum Teil im Schnitt; in
- Fig. 9: veranschaulicht die Änderung der Verschiebung des Ziehelements als Funktion des Verdrehungswinkels der Pedalachse; in
- Fig. 10: ist für den herkömmlichen und für den erfindungsgemäßen Antrieb das Pedalkraft-Verdrehwinkel-Diagramm angegeben;
- Fig.11: zeigt eine alternative Lösung für die Bewegung der Schwingen;
- Fig. 12: zeigt eine alternative Lösung für den Antrieb des Hinterrades in Seitenansicht;
- Fig. 13: ist die Draufsicht auf die Lösung gemäß Fig. 12; in
- Fig. 14: ist ein Verschiebung-Verdrehwinkel-Diagramm ähnlich wie das in Fig. 9 dargestellt;
- Fig. 15: ist die Vorderansicht einer dritten Ausführungsform der Erfindung; in
- Fig. 16: ist die dritte Ausführungsform in Seitenansicht gezeigt;
- Fig. 17: stellt schematisch einen Antrieb ohne Schwingen dar, dessen Übersetzung konstant ist; in
- Fig. 18: ist das die Charakteristik eines kreisförmigen Kettenrades aufweisende Nutenprofil dargestellt; und
- Fig. 19: zeigt ein Nutenprofil, das "biopace"-Charakteristik hat.

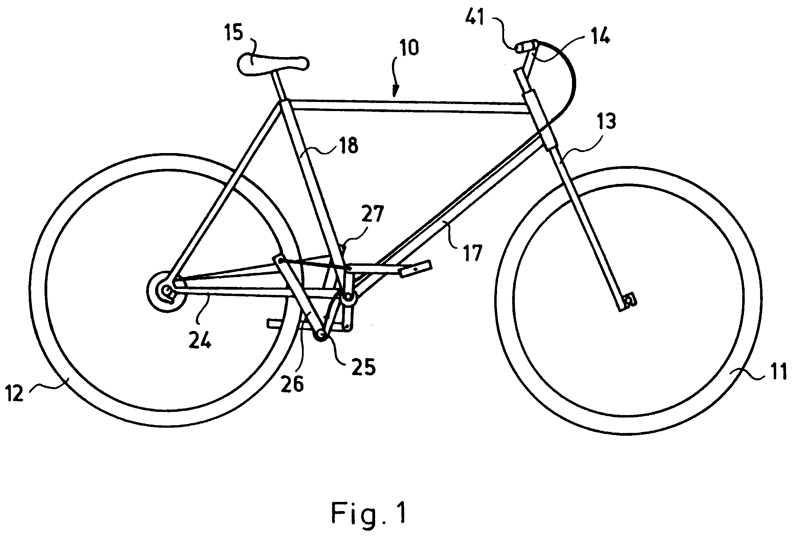

Das in Fig. 1 dargestellte Fahrrad ist, abgesehen von der Gestaltung des Antriebes, herkömmlich aufgebaut, d.h. es hat einen starren Rahmen 10, ein frei laufendes Vorderrad 11, ein angetriebenes Hinterrad 12, eine bezogen auf den Rahmen 10 verdrehbar befestigte Gabel 13, einen mit dieser verbundenen Lenker 14 und einen Sattel 15. Das Vorderrad 11 ist in der üblichen Weise in das Ende der Gabel 13 montiert.

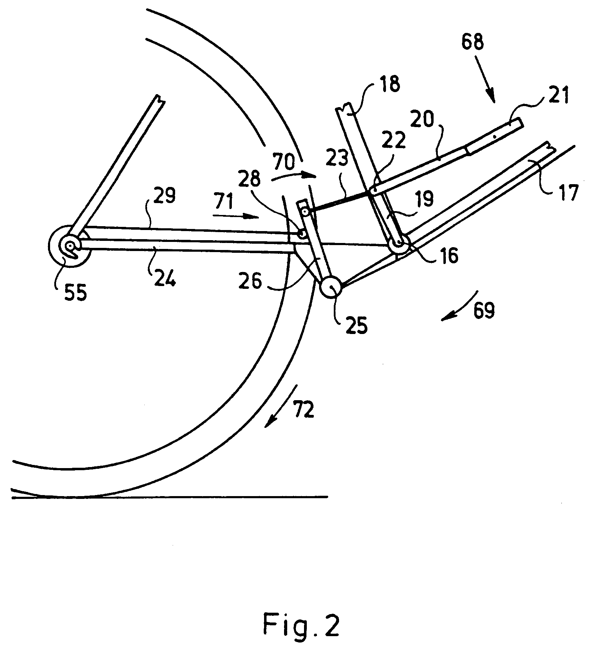

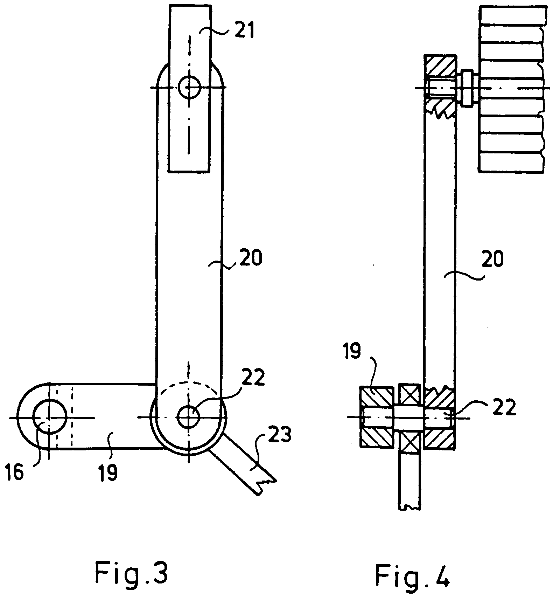

Der Antrieb wird von zwei Pedalen betrieben, die an beiden Seiten des Rahmens 10, bezogen auf die Pedalachse 16 spiegelsymmetrisch angeordnet sind. Bei der erfindungsgemäßen Lösung sind (abweichend von der üblichen Pedalgestaltung) die Schäfte der Pedale keine geraden, sondern knieförmig gebrochene starre Stangen, an deren Knieteil sich mit gelenkiger Verbindung je eine Ziehstange anschließt. Durch die Ziehstangen wird die um die Pedalachse 16 herum verlaufende Kreisbewegung der Pedale in eine alternierende Bewegung umgewandelt. Der besseren Anschaulichkeit halber sind von diesem Mechanismus in Fig. 2 nur die Teile eingezeichnet, die vor der Ebene der Zeichnung liegen. Die Verbindung zwischen Ziehstange und Pedal ist aus den Fig. 3 und 4 zu entnehmen.

Aus Fig. 2 ist ersichtlich, daß sich die Pedalachse 16 am Zusammenschluß der einen Teil des Rahmens 10 bildenden, in V-Form aufeinander zulaufenden Rahmenstangen 17 und 18 befindet und das Pedal 21 an ihr über starr miteinander verbundene Stangen 19, 20 befestigt ist. Die innere Stange 19 ist mittels eines in Fig. 3 mit einer unterbrochenen Linie skizzierten Keilbolzens starr mit der Pedalachse 16 verbunden. In einer am anderen Ende dieser Stange 19 ausgebildeten Bohrung ist mit enger Passung das eine Ende eines parallel zur Pedalachse 16 verlaufenden Bolzens 22 befestigt. Die Stangen 19 und 20 schließen miteinander einen rechten Winkel oder annähernd rechten Winkel ein. Den die Stangen 19 und 20 verbindenden Bereich des Bolzens 22 umschließt eine an dem einen Ende einer Ziehstange 23 ausgebildete Bohrung. Die Bohrung der Ziehstange 23 umfaßt den Mantel des Bolzens 22 locker und ist dadurch um den Bolzen 22 frei drehbar. Das äußere Ende der Stange 20 und das Pedal 21 sind in üblicher Weise über ein Lager verbunden.

An der zwischen der Pedalachse 16 und dem Hinterrad 12 befindlichen hinteren Gabel 24 des Rahmens 10 ist auf die aus Fig. 2 ersichtliche Weise eine Hilfsachse 25 angebracht, an deren Enden je eine Schwinge 26, 27 auslenkbar befestigt ist. In Fig. 2 ist nur die Schwinge 26 sichtbar. Das hintere Ende der Ziehstange 23 schließt sich über ein Gelenk an den oberen Abschnitt der Schwinge 26 an.

Bei Drehen des Pedals zwingt die Ziehstange 23 die Schwinge 26 zu einer alternierenden Kreisbewegung innerhalb eines gegebenen Winkelbereichs. An der Schwinge 26 befindet sich in verstellbarer Entfernung von der Hilfsachse 25 eine in Richtung des Hinterrades 12 zeigende Öse 28, in die das hintere Ende eines mit der Nabe des Hinterrades 12 verbundenen Ziehelementes, zum Beispiel eines Drahtseiles eingehängt oder anderweitig befestigt ist. Die auf das Ziehelement wirkende Zugkraft treibt das Hinterrad 12 dergestalt, daß das von den Schwingen 26 oder 27 entferntere Ende des Ziehelementes an den auf beiden Seiten an der Nabe des Hinterrades 12 angeordneten, gespannten Freilaufmechanismen befestigt ist und auf diese in gegebener Richtung ein Drehmoment ausübt.

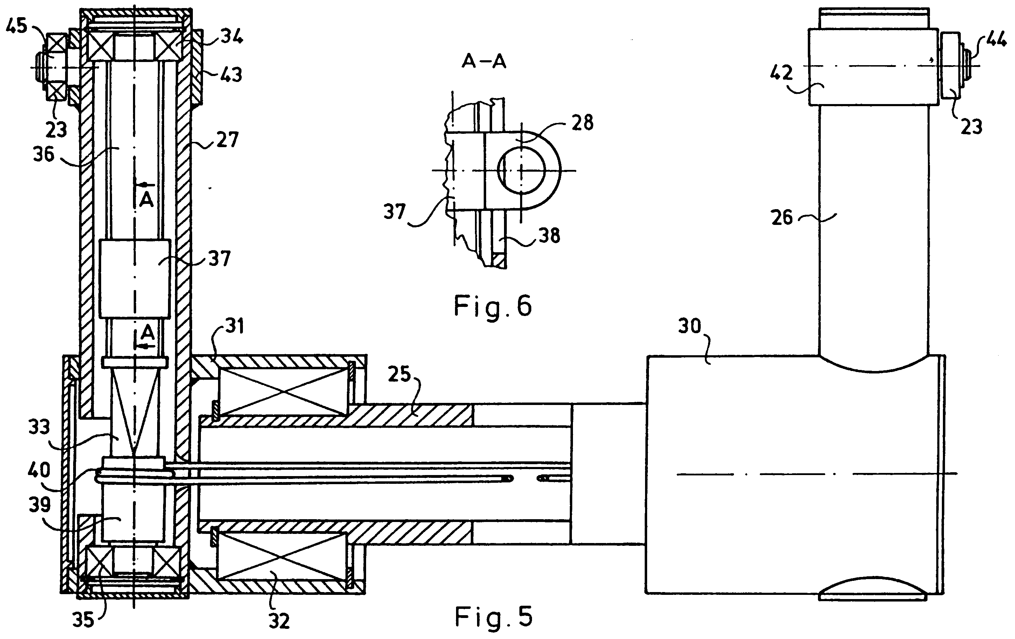

Ein Ausführungsbeispiel für eine aus der Hilfsachse 25 sowie den Schwingen 26 und 27 bestehende Konstruktion ist in den Fig. 5 und 6 gezeigt.

An den unteren Enden der rohrförmigen Schwingen 26, 27 sind lotrecht zur Schwingenachse Hülsen 30, 31 angeschweißt. Die Verbindung zwischen den Hülsen 30, 31 und den beiden Enden der Hilfsachse 25 ist durch je ein Lager gewährleistet, von denen in Fig. 5 nur das Lager 32 sichtbar ist. Im Inneren der Schwinge 27 befindet sich eine Spindelachse 33, die an ihren beiden Enden von Lagern 34 und 35 gestützt ist. Auf der Spindenachse 33 ist ein Gewindeabschnitt 36 ausgebildet, der die Verbindung zu einer Hülse 37 herstellt. An der Schwinge 27 ist in Richtung des Hinterrades eine in Achsrichtung verlaufende Nut 38 ausgebildet, und die Öse 28 (Fig. 6) führt durch die Nut 38, während das innere Ende der Öse 28 an der Hülse 37 befestigt ist. Wird die Spindelachse 33 gedreht, so kann die Hülse 37 dieser Drehung nicht folgen, und deshalb ändert sich ihre Höhenstellung in Abhängigkeit von der Drehrichtung, womit die Höhe des in die Öse 28 eingehängten Ziehelementes 29 reguliert werden kann.

Mit dem unteren Teil der Spindelachse 33 ist ein in Achsrichtung frei beweglicher zylindrischer Abschnitt 39 formschlüssig verbunden, und sein Mantel ist von einigen Wicklungsgängen einer Schnur 40 umgeben. Die Bewegung der Schnur 40 dreht die Spindelachse 33. Der eine Teil der Schnur 40 ist über eine im Inneren der zweiten Schwinge 26 befindliche ähnliche Spindelachse geführt, der diese verlassende Schnurteil sowie der den zylindrischen Abschnitt 39 verlassende andere Schnurteil führt über entsprechende schnurführende Rollen an dem Rahmen 10 des Fahrrades entlang bis zum Lenker 14 und endet an der dort angebrachten Gangschaltung 41 (Fig. 1). Wird die Gangschaltung 41 gedreht, so bewegen sich die beiden Teile der Schnur 40 in entgegengesetzter Richtung und drehen über den beschriebenen Mechanismus die Spindelachsen 33, wodurch sich die Höhe der Hülse 37 und der mit dieser verbundenen Öse 28, d.h. die Übersetzung des Antriebs, ändert.

Die Schwingen 26, 27 werden von der durch das Pedal 21 bewegten Ziehstange angetrieben, indem an den oberen Enden der Schwingen 26, 27 je ein Ring 42, 43 befestigt ist, der über Buchsen 44, 45 das hintere Ende der Ziehstange 23 auslenkbar befestigt.

Durch den bisher beschriebenen Antriebsmechanismus führen bei Drehen der Pedale die Schwingen 26, 27 um die Hilfsachse 25 herum einander entgegengesetzt gerichtete Schwingbewegungen aus. Die Ziehstange 23 ist an beiden Enden über ein Gelenk befestigt und kann deshalb auf die Schwingen 26, 27 nur in Stangenrichtung eine Kraft ausüben. Das Drehen des Hinterrades 12 erfolgt durch die entgegengesetzte Schwingbewegungen ausführenden Schwingen 26, 27 unter Zwischenschaltung der Ziehelemente 29. Die Ziehelemente 29 bewegen sich bei einer Kreisumdrehung des Pedals um eine von der Entfernung zwischen der Öse 28 und der Hilfsachse 25 abhängende Länge, diese Entfernung kann mit Hilfe der Gangschaltung 41 zwischen zwei Extremwerten eingestellt werden.

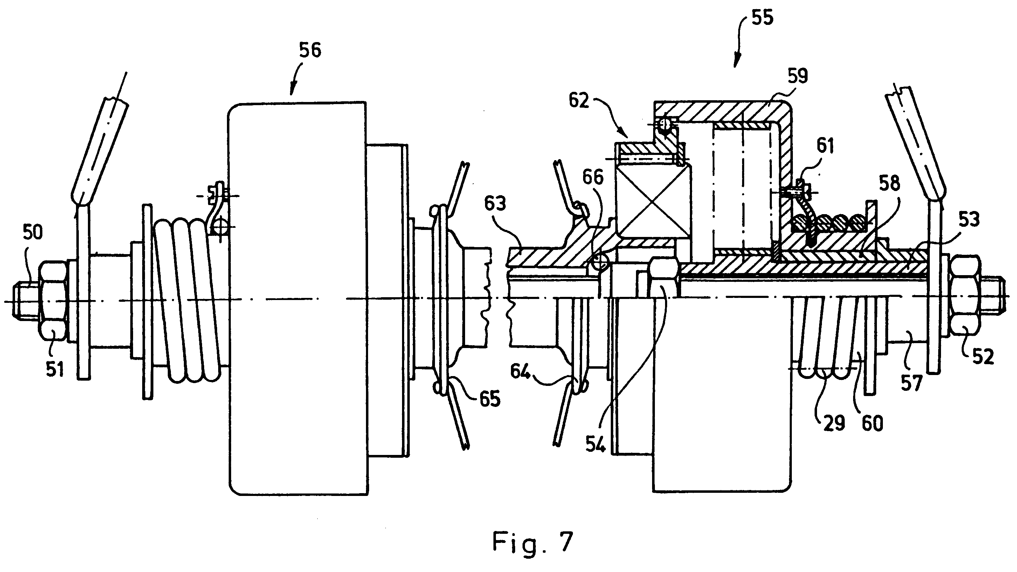

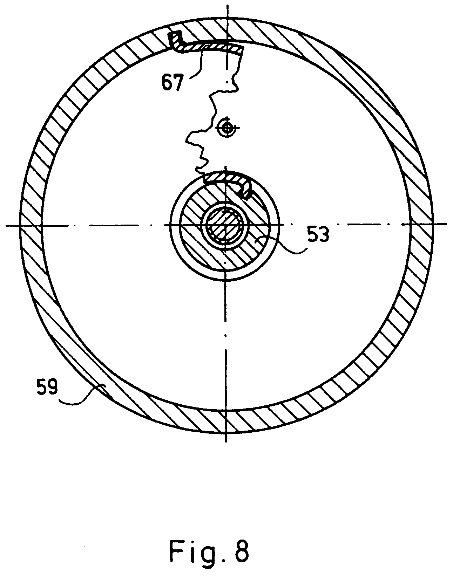

Die beim Hinterrad 12 befindlichen Konstruktionselemente des Antriebes sind in den Fig. 7 und 8 dargestellt. Die in Fig. 7 dargestellte Konstruktion ist an der Achse des Hinterrades 12 angeordnet, ihre beiden Seiten sind symmetrisch. In Fig. 7 ist der linke Teil als Ansicht, der rechte Teil halb als Ansicht, halb als Schnitt dargestellt. Die beiden Enden der Spindelachse 50 des Hinterrades 12 sind mit zwei Muttern 51, 52 über je eine Unterlegscheibe an der hinteren Gabel des Rahmens 10 befestigt. Auf beiden Seiten der Spindelachse 50, an der Innenseite der hinteren Gabel aufliegend, befindet sich je eine stehende Hülse 53. Das innere Ende der Hülse 53 wird von einer Mutter 54 befestigt. Die zwischen die Muttern 52, 54 eingeklemmte Hülse 53 hält einen Freilaufmechanismus 55, der genau so aufgebaut ist wie der auf der anderen Seite befindliche Freilaufmechanismus 56, die beiden Freilaufrichtungen sind jedoch einander entgegengesetzt. Der Freilaufmechanismus 55 enthält einen auf die Hülse 53 aufgesetzten Stützring 57, eine Lagerhülse 58, eine Trommel 59 mit einem schnurführenden Mantel 60 und einem Schnurbefestigungselement 61, schließlich eine freilaufende Lagerung 62, die zwischen der Innenwand der Trommel 59 und einer inneren Radhülse 63 eine in der einen Richtung freie Drehung erlaubende, in der anderen Richtung hingegen starre Bindung gewährleistende Verbindung schafft.

Die innere Radhülse 63 ist von herkömmlicher Form, an ihren beiden Rändern 64, 65 befindet sich eine Scheibe zur Aufnahme der Speichen. Mit der Spindelachse 50 ist sie über ein Lager verbunden. In Fig. 7 ist das Lager 66 auf der rechten Seite sichtbar.

Im Inneren der zu dem Freilaufmechanismus 55 gehörenden Trommel 59 befindet sich eine an der stehenden Hülse 53 und am Trommelmantel befestigte, in Spiralform angeordnete, vorgespannte Feder 67 (Fig. 8), die bestrebt ist, die Trommel 59 in Freilaufrichtung von der Hülse 53 wegzudrehen. Das Ziehelement 29 wird von der um den schnurführenden Mantel gewickelten Schnur gebildet, deren eines Ende durch das Schnurbefestigungselement 61 befestigt ist, während das andere Ende in die an der Schwinge 26 befindliche Öse eingehängt ist. Zwischen den beiden äußersten Stellungen der Schwinge 26, in der äußersten Stellung der Öse 28 ist die Entfernung am größten, die Schnur ist in einer wenigstens dieser Entfernung entsprechenden Länge auf den schnurführenden Mantel 60 aufgewickelt. Die Feder 67 ist bestrebt, die Trommel 59 in einer Richtung wegzudrehen, in der die Schnur maximal auf den schnurführenden Mantel 60 aufgewickelt wird.

Wird das Pedal des Fahrrades gedreht, so vollführen die Schwingen 26, 27 in der bereits beschriebenen Weise zwischen zwei äußersten Stellungen einander entgegengesetzt gerichtete Schwingbewegungen. Zwischen den Schwingen 26, 27 und den Freilaufmechanismen 55, 56 wird die Verbindung durch die Ziehelemente 29 hergestellt, die immer gespannt sind. In der in Fig. 2 skizzierten Stellung wirkt auf das Pedal 21 in Richtung des Pfeiles eine Kraft. Die Stangen 19, 20 bewegen sich um die Pedalachse 16 in Uhrzeigerrichtung dem Pfeil 69 entsprechend. Die Ziehstange 23 bewegt sich nach rechts in Vorwärtsrichtung und bewegt dadurch die Schwinge 26 in Richtung des Pfeiles 70 um die Hilfsachse 25. Das Ziehelement 29 bewegt sich in Richtung des Pfeiles 71 vorwärts und belastet den Freilaufmechanismus 55 in Schließrichtung (Befestigungsrichtung), deshalb wird das Hinterrad 12 von der Zugkraft in Richtung des Pfeiles 72 vorwärtsgedreht.

Gleichzeitig bewegt sich die auf der anderen Seite befindliche Schwinge 27 nach hinten, das dort befindliche Ziehelement (Schnur) wird von der im Freilaufmechanismus 56 befindlichen Feder auf den Trommelmantel gewickelt. Wenn sich auch das Hinterrad 12 nach vorwärts dreht: der Freilaufmechanismus 56 erlaubt, daß sich die Trommel in der entgegengesetzten Richtung wie das Rad dreht und die Spannwirkung der Feder zur Geltung kommt. Der Funktionsbereich der Spannung mittels Feder ermöglicht das Aufwickeln der Schnur auch bei einer der größten Bewegungslänge entsprechenden Schwingung. Wenn das Pedal 21 den Totpunkt durchläuft, kehren sich die Schwingrichtungen der Schwingen 26, 27 um, und der Freilaufmechanismus 56 gelangt in verriegelte Stellung, während der Freilaufmechanismus 55 frei wird und seine Federspannung das sich nun rückwärts bewegende Ziehelement 29 aufwickelt.

Die Bewegungslänge des Ziehelementes 29 kann durch Verstellen der Lage der Öse 28 geändert werden, wodurch sich die Übersetzung des Pedalantriebs ändert. Im Gegensatz zu den herkömmlichen Fahrrädern kann die Übersetzung stufenlos und zu beliebigen Zeitpunkten (als auch, wenn das Rad nicht fährt, sondern steht) geändert werden.

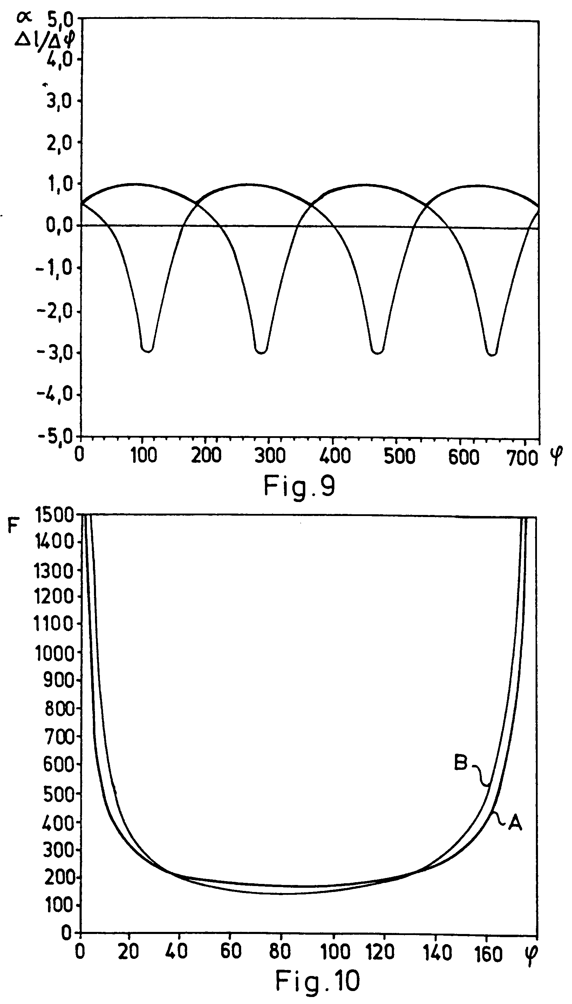

Das Diagramm in Fig. 9 zeigt die Änderung der Wegbewegung des Ziehelementes 29 als Funktion der Winkeldrehung der Pedalachse 16. In der Zeichnung sind die Diagramme beider (sich einander entgegengesetzt bewegender) Ziehelemente dargestellt. Von den Ziehelementen verrichtet natürlich immer nur das eine Arbeit, das sich mit größerer Geschwindigkeit nach vorn bewegt. In dem Diagramm ist die dicker ausgezogene Linie die summierte Kurve der jeweiligen Zugelemente, die Schnittpunkte der Kurvenabschnitte bezeichnen die Umkehrstellen der Ziehelemente.

In Fig. 10 ist die bei einem unter konstanter Belastung angetriebenen Fahrrad auftretende Pedalkraft F als Funktion der Winkelstellung der Pedalachse 16 dargestellt. Unter der Pedalkraft F wird hier die in Richtung der hinteren Rahmenstange 18 des Rahmens 10 wirkende Komponente der auf das Pedal 21 ausgeübten Kraft verstanden, welche Komponente im wesentlichen in Richtung der den Mittelpunkt des Sattels 15 mit der Pedalachse 16 verbindenden Geraden fällt. In Fig. 10 bezieht sich die Kurve A auf den erfindungsgemäßen Antrieb, die Kurve B auf ein herkömmliches (d. h. mit Kette angetriebenes) Fahrrad. Im Fall des erfindungsgemäßen Antriebes ist die Kraftausübung in einem breiteren Winkelbereich gleichmäßig als dies beim herkömmlichen Antrieb der Fall ist, der zum Totpunkt gehörende Winkelbereich ist also kleiner. Der in einem breiteren Winkelbereich gleichmäßigere Kraftbedarf ermüdet den Radfahrer weniger, deshalb wird der Antrieb des erfindungsgemäßen Fahrrades vom Radfahrer als leichter empfunden.

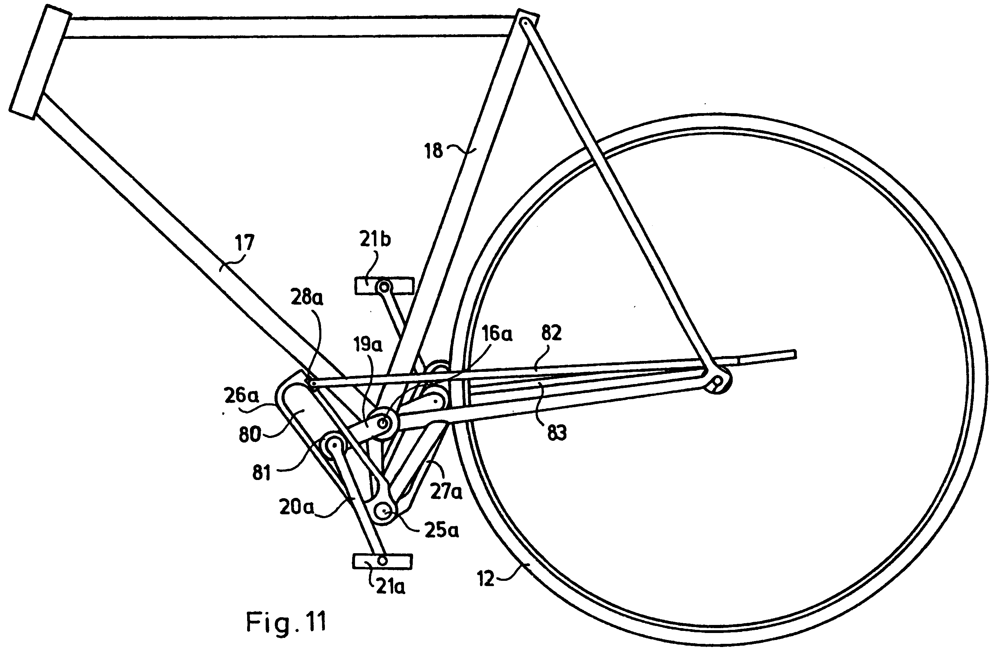

Eine andere Ausführungsform des erfindungsgemäßen alternierenden Antriebes ist in Fig. 11 gezeigt. Bei diesem liegt die Hilfsachse 25a unterhalb und nur wenig hinter der Pedalachse 16a. An Stelle der bei der vorhergehenden Ausführungsform verwendeten, gerade Stangen beziehungsweise hohle Rohre darstellenden Schwingen 26, 27 treten hier die in Fig. 11 dargestellten Schwingen 26a, 27a, die eine von parallelen Seitenwänden umgrenzte innere Öffnung 80 aufweisen. Der Hebel der Pedalkonstruktion besteht auch hier aus starr miteinander verbundenen, miteinander einen Winkel, zweckmäßig einen rechten Winkel, einschließenden Stangen 19a, 20a. Der die Stangen 19a und 20a verbindende, zur Ebene der Zeichnung lotrechte kurze Achsabschnitt hält ein Lager 81. Der Außenring des Lagers 81 ist in die innere Öffnung 80 eingepaßt.

Werden die Pedale 21a, 21b gedreht, so wird der Innenring des Lagers 81 von der die Stangen 19a, 20a verbindenden Achse auf eine Kreisbahn gezwungen. Da sich das Lager im Inneren der inneren Öffnung 80 in Stangenrichtung frei bewegen kann, führen die Schwingen 26a und 27a eine Schwingbewegung aus. Durch das Lager 81 werden die Reibungsverluste in dem auf diese Weise entstandenen Kulissenantrieb auf ein Minimum verringert.

Zur Bewegung der Schwingen 26a, 27a sind die in Fig. 2 dargestellten Ziehstangen 23 nicht erforderlich, denn das an der Kniestelle der Pedalarme angebrachte Lager 81 verwandelt durch die innere Öffnung 80 die Drehbewegung der Pedale in eine alternierende Bewegung.

Die in Fig. 11 gezeigte Lösung weicht auch, was den Antrieb des Hinterrades 12 betrifft, von dem in den Fig. 2 und 7 dargestellten Schnurantrieb ab. An den hinteren Abschnitt der Schwingen 26a und 27a schließt sich je eine Öse, zum Beispiel die in Fig. 11 dargestellte Öse 28a, an, in der eine kurze Gelenkachse befestigt ist. Die Öse 28a ist über einen in der Zeichnung nicht dargestellten Mechanismus mit der Gangschaltung des Fahrrades verbunden, und die Entfernung der Öse 28a von der Hilfsachse 25a kann innerhalb eines vorgegebenen Bereiches stufenlos eingestellt werden. Die Gestaltung der Gangschaltung wurde im einzelnen nicht dargestellt, jedoch ist es für einen in der Mechanik bewanderten Fachmann eine Routineaufgabe, an den Schwingen 26a, 27a eine die Öse 28a gesteuert bewegende Konstruktion zu schaffen.

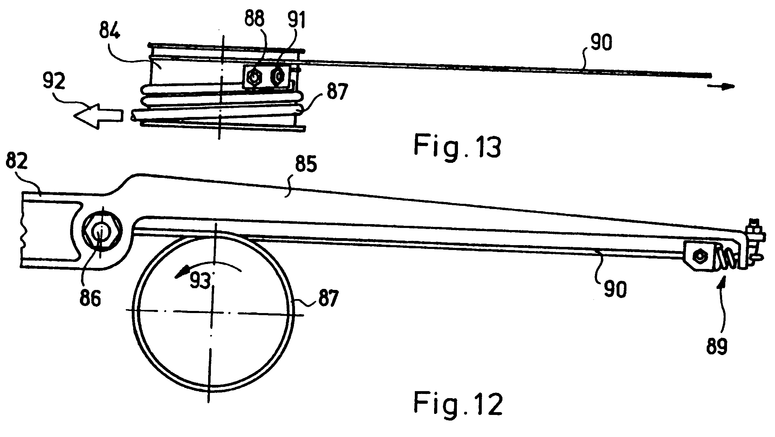

Die in der Öse 28a geführte Gelenkachse ist mit je einer hinteren Zugstange 82, 83 verbunden. Der durch die hinteren Zugstangen 82, 83 realisierte Antrieb ist in den Fig. 12 und 13 gezeigt. Auf der Achse des Hinterrades 12 ist auf jeder Seite eine Seiltrommel angebracht, von denen in Fig. 13 nur die eine, die Seiltrommel 84, zu sehen ist. Die Seiltrommeln sind über in ihrem Inneren befindliche, einander entgegengerichtete Freilaufmechanismen mit dem Hinterrad 12 verbunden. Der hintere Abschnitt 85 der hinteren Zugstange 82 ist ähnlich wie ein Violinbogen ausgebildet, d.h. er hat an seinem einen Ende eine Seileinspannung, am anderen eine Seilspann- und -aufnahmekonstruktion. Die vorn befindliche Seileinspannung 86 ist mit dem einen Ende der die Zugkraft auf das Hinterrad 12 übertragenden Ziehschnur 87 verbunden, mehrere Wicklungsgänge der Ziehschnur 87 sind auf die Seiltrommel 84 aufgewickelt, und auch ihr anderes Ende ist im Befestigungspunkt 88 mit der Seiltrommel 84 verbunden. Das Ende des hinteren Abschnitts 85 der hinteren Ziehstange 82 ist über eine Seilspannkonstruktion 89 mit einem Ende einer Spannschnur 90 verbunden. Die Spannschnur 90 ist ebenfalls mit mehreren Windungen auf den Mantel der Seiltrommel 84 aufgewickelt, ihr Ende ist am Befestigungspunkt 91 befestigt.

Die alternierende Bewegung der Schwinge 26a bewegt die Ziehstange 82 vorwärts und rückwärts. In den Fig. 12 und 13 ist die Konstruktion in der hintersten Stellung abgebildet, wenn sich die hintere Ziehstange 82 in Richtung des Pfeils 92 vorwärts bewegt. Über die Seileinspannung 86 wird die Ziehschnur 87 von der hinteren Ziehstange 82 vorwärts gezogen, und diese Bewegung ist bestrebt, die Seiltrommel 84 in Richtung des Pfeiles 93 zu drehen. Der in der Seiltrommel 84 befindliche Freilaufmechanismus schließt bei Drehung in Richtung des Pfeiles 93, und dadurch wird von der auf die Ziehschnur 87 wirkenden Zugkraft das Hinterrad 12 vorwärts gedreht. Bei Drehen der Seiltrommel 84 wird die andere Spannschnur 90 auf die Seiltrommel 84 aufgewickelt, inzwischen wickelt sich natürlich die Ziehschnur 87 ab. Dieser Bewegungszustand dauert, bis die Schwinge 26a in die vordere Endstellung ihrer Bewegung gelangt ist. Zu diesem Zeitpunkt ist die hintere Zugstange 82 am weitesten vorn, die andere hintere Zugstange 83 am weitesten hinten. Beim Richtungswechsel der Schwingen bewegt sich die andere hintere Ziehstange 83 vorwärts, der zu ihr gehörende Freilaufmechanismus schließt und übt ein Drehmoment auf das Hinterrad 12 aus. Die hintere Ziehstange 82 zieht an der Seilspannkonstruktion 89 die Spannschnur 90 nach hinten, jedoch ist diese Kraft wesentlich geringer als die Gegenkraft, weil der in der Seiltrommel 84 befindliche Freilaufmechanismus nun in Freilaufstellung ist. Die vorher aufgewickelte Spannschnur 90 wickelt sich von der Seiltrommel 84 ab, während die Ziehschnur 87 aufgewickelt wird und die Konstruktion in hinterer Endstellung nun wieder in den in Fig. 12 dargestellten Zustand gelangt. Die Spannschnur 90 ist zweckmäßig dünner und für eine kleinere Belastung dimensioniert als die Ziehschnur 87.

Der hier beschriebene Antrieb ist aus mehreren Gründen vorteilhafter als der Antrieb gemäß den Fig. 7 und 8. In den einzelnen Perioden der Schwingen braucht keine Feder aufgezogen zu werden, deren Aufgabe im unbelasteten Takt das Aufwickeln und Spannen der Schnur war. Die zum Spannen der Federn erforderliche tote Arbeit entfällt. Ein anderer Vorteil ist die wesentliche Vereinfachungder auf der Achse des Hinterrades befindlichen Konstruktion.

Die in den Fig. 12 und 13 dargestellte Bewegung des Rades mit Schwingstangen kann natürlich auch bei der in den Fig. 1-6 dargestellten Schwingenkonstruktion angewendet werden.

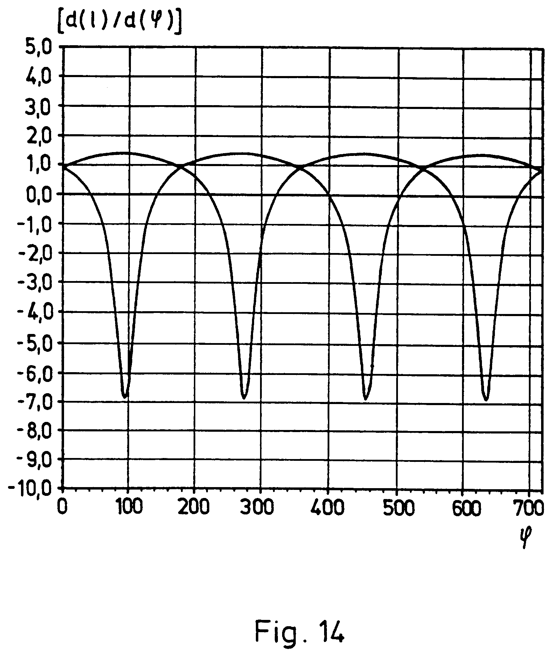

Das Diagramm in Fig. 14 zeigt die Änderung der Bewegung der hinteren Zugstange 82 als Funktion der Winkeldrehung der Pedalachse 16a für den Fall des in den Fig. 11-13 dargestellten alternierenden Antriebs. Das Diagramm ist dem in Fig. 9 gezeigten ähnlich, die Kennlinie verläuft etwas flacher, d.h. die Verhältnisse sind günstiger.

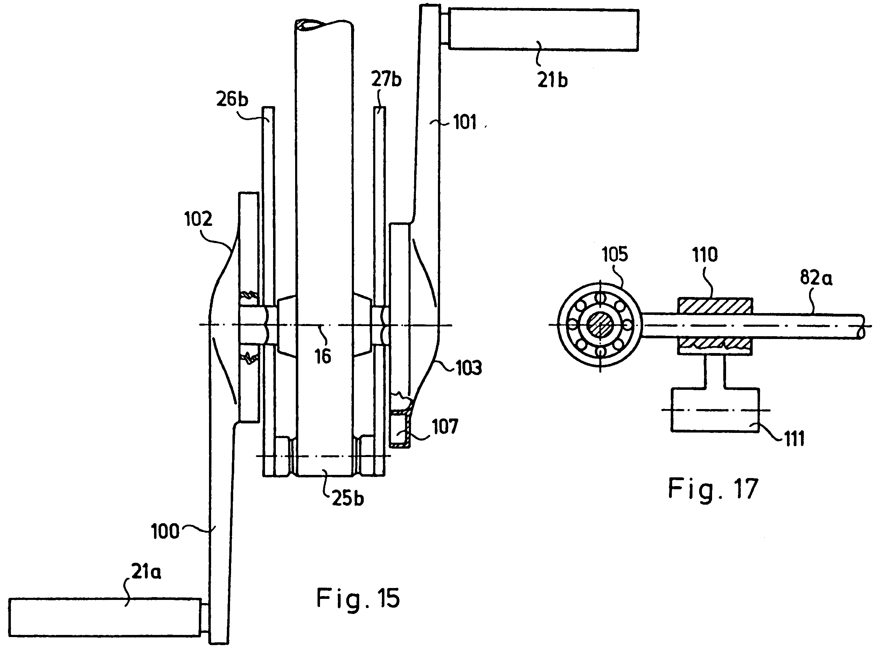

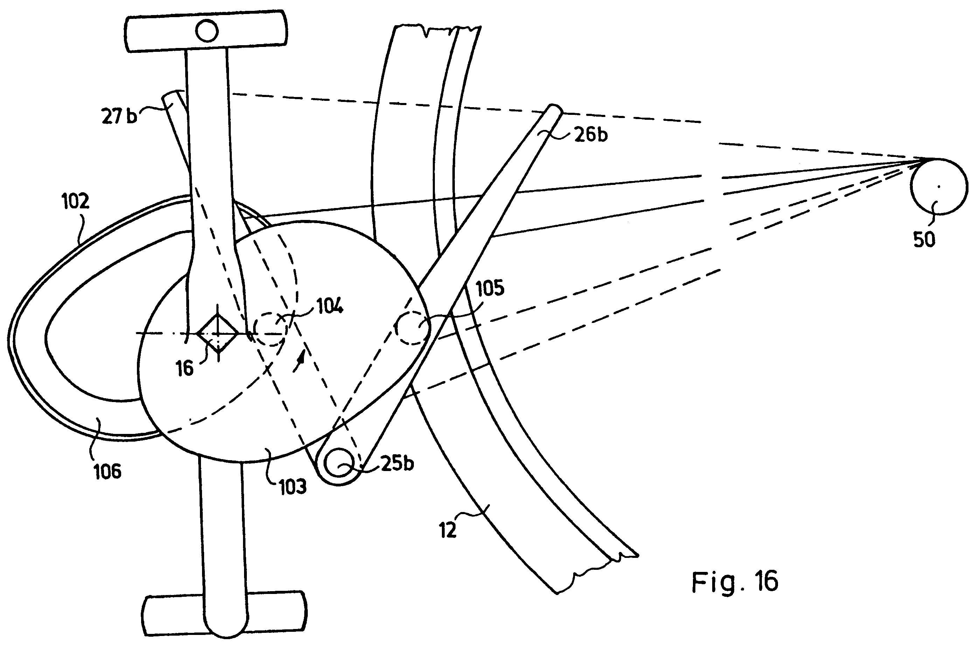

In den Fig. 15-19 ist eine weitere Ausführungsform des erfindungsgemäßen alternierenden Antriebs dargestellt. An der Pedalachse 16 des Fahrrades ist an beiden Seiten je ein Pedal 21a, 21b befestigt, das einen geraden Hebel 100, 101 und eine das innere Ende der Hebel 100, 101 bildende Exzenterscheibe 102, 103 aufweist. Die Exzenterscheiben 102, 103 sind nicht kreisrund, sondern verfügen über das in den Fig. 16 beziehungsweise 18 und 19 dargestellte Profil, das der Form einer in ihnen ausgebildeten Nut folgt.

Wie aus Fig. 16 hervorgeht, sind um die hinter und unter der Pedalachse 16 befindlichen Hilfsachse 25b zwei Schwingen 26b, 27b gelagert. Bei etwa einem Drittel der Länge der Schwingen 26b, 27b, d.h. näher an der Hilfsachse 25b, steht aus den Schwingen 26b, 27b je ein Achsenstumpf in Richtung der von ihnen aus gesehen weiter außen befindlichen Exzenterscheiben 102, 103 heraus, und auf den Achsenstümpfen ist je ein Lager 104, 105 befestigt. In Fig. 16 sind die Lager 104, 105, weil sie verdeckt sind, durch eine unterbrochene Linie angedeutet. Auf der inneren Oberfläche der Exzenterscheiben 102, 103 sind eine geschlossene Kurve bildende Nuten 106 beziehungsweise 107 ausgebildet, deren Breite dem Durchmesser der Lager 104, 105 entspricht. Die Lager 104, 105 sind locker in die Nuten 106, 107 eingepaßt, deren Hauptaufgabe es ist, für die Lager 104, 105 eine Führungsbahn zu bilden.

In Fig. 15 an der durchbrochenen Stelle ist der Querschnitt der Nut 107 sichtbar, in Fig. 16 ist ein großer Teil der Nut 106 von vorn zu sehen. Die Nuten 106, 107 sind deckungsgleiche Profile und um den Mittelpunkt der Pedalachse 16 symmetrisch angeordnet.

Beim Drehen der Pedale 21a, 21b drehen sich auch die beiden Exzenterscheiben 102, 103, und die Nuten 106, 107 führen über die Zwangsverbindung die in sie eingepaßten Lager 104, 105. Die Schwingen 26b, 27b werden von den entlang der Nutenbahnen geführten Lagern 106, 107in eine alternierende Schwingbewegung um die Hilfsachse 25b herum versetzt. Infolge der Lagerung der Führung sind die Reibungsverluste gering, und die beiden Schwingen 26b, 27b führen genau wie bei den beiden vorbeschriebenen Ausführungsbeispielen alternierende Schwingbewegungen aus.

In den Fig. 15 und 16 sind die an die Schwingen 26b, 27b montierten Ziehelemente, die das Hinterrad 12 antreiben, nicht abgebildet, jede der früher erläuterten Lösungen ist hier geeignet. Wenn die Lage der Ziehelemente auf den Schwingen verändert wird, so ändert sich damit gleichzeitig die Übersetzung des Antriebes, die zum Beispiel durch die zu einer Bewegungsperiode der einen Schwinge gehörende Radumdrehung definiert werden kann. In Fig. 16 durch die die Enden der Schwingen 26b, 27b mit der Achse 50 des Hinterrades 12 verbindenden unterbrochenen Linien die der größten Übersetzung entsprechende Verbindung gezeigt; die beiden anderen unterbrochenen Linien gehören zur kleinsten Übersetzung, bei der die unterbrochen gezeichneten Ziehelemente mit dem unteren Abschnitt der Schwingen 26b, 27b verbunden sind.

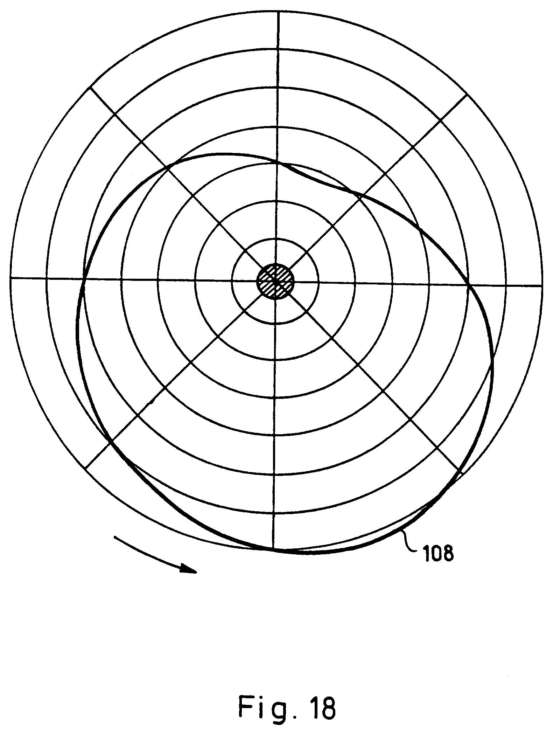

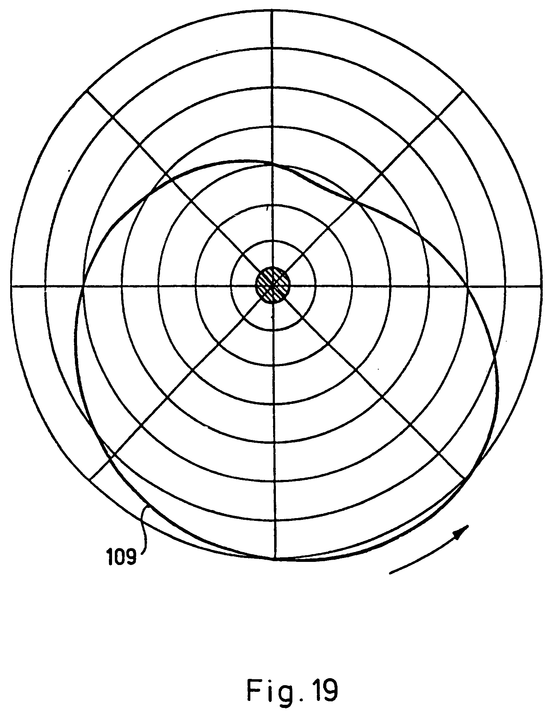

Die Kennlinie des Antriebs hängt von der Form der Nuten 106, 107 als geschlossene Kurvenlinien und der exzentrischen Anordnung der Pedalachse in dem geschlossenen Profil ab. Die Charakteristik des Antriebs kann mit dem Computer modelliert werden. Bei Verwendung des in Fig. 18 dagestellten Nutenprofils 108 entstehen Verhältnisse, die der Antriebscharakteristik des auf herkömmliche Weise mit kreisförmigem Kettenrad angetriebenen Fahrrades entsprechen. Wird das in Fig. 19 dargestellte Nutenprofil 109 gewählt, so erhält man eine bei den mit einem abgerundet rhombusförmigen Kettenrad versehenen Bergfahrrädern häufig angewendete "biopace"-Kennlinie. Unter Antriebskennlinie ist die Funktionsverbindung zwischen dem Drehwinkel der Pedalachse und dem Drehwinkel des angetriebenen Hinterrades zu verstehen. Die Antriebskennlinie der in den Fig. 1-8 gezeigten ersten Ausführungsform ist aus Fig. 9 ersichtlich. In der Kennlinie ergeben sich die Arbeit verrichtenden Takte aus der einhüllenden Kurve, denn von zwei beliebigen Auslenkungen kommt immer nur die größere zum Tragen, d.h. von den einander überlagernden Diagrammen der beiden Antriebshälften darf nur das obere berücksichtigt werden. Wird das in Fig. 18 dargestellte Nutenprofil 108 angewendet, so erhält man eine einhüllende Kurve, die im Gegensatz zu der einhüllenden Kurve gemäß Fig. 9 eine parallel zur Achse verlaufende Gerade ist. Das bedeutet, daß in jeder beliebigen Winkelstellung einer Einheit Pedalachsenwinkeldrehung eine konstante Einheit Hinterachsendrehung zugeordnet werden kann. Eine völlig gerade Kennlinie kann dadurch realisiert werden, daß sich die Kennlinien der beiden Seiten überlagern, d.h. nachdem zum Beispiel die Geschwindigkeit der linken Schwinge in der jeweiligen Richtung die Geschwindigkeit der rechten Schwinge erreicht hat, sich auch die rechte Schwinge noch eine gewisse Zeit in dieser Richtung bewegt und erst danach die Richtung wechselt. Bei dem in Fig. 19 dargestellten Nutenprofil 109 ist die Kennlinie nicht gerade, sondern besteht aus leicht gewellten Abschnitten.

Alle bisher gezeigten Ausführungsformen des erfindungsgemäßen alternierenden Antriebs enthielten zwei Schwingen, die mit den einzelnen Freiläufen in Antriebsverbindung standen. Die Schwingen fungieren als einarmige Hebel, und die stufenlose Regelung der Übersetzung kann dadurch gelöst werden, daß man den Anschlußpunkt der Drehachse der Schwingen annähert oder davon entfernt. Bei einem großen Teil der im Handel befindlichen Fahrräder kann die Übersetzung nicht geändert werden. Diese Räder sind wegen ihres niedrigeren Preises populär. Bei dem alternierenden Antrieb kann die konstante Übersetzung dadurch erzielt werden, daß die Ziehelemente an den Schwingen in einem Punkt bestimmter Höhe fest angebracht sind. Bei der in den Fig. 15 und 16 dargestellten Ausführungsform mit Führungsnuten können die Schwingen auch weggelassen werden. Werden die in die Nuten der Exzenterscheiben 102, 103 eingepaßten Lager 104, 105 nicht an Schwingen montiert, sondern auf die in Fig. 17 gezeigte Weise an das vordere Ende einer der in Fig. 12 ab-gebildeten ähnlichen hinteren Ziehstange 82a, und dieses vordere Ende der Ziehstange 82a in einer Hülse 110 geführt, so bewegt sich, wenn die Exzenterscheibe gedreht wird, die Ziehstange 82a durch die Hülse 110 geführt vor- und rückwärts. Die Hülse 110 ist mit einer Schelle an der hinteren Gabel des Fahrrades befestigt. Auf diese Weise wird der Antrieb ohne Schwingen realisiert, jedoch kann die Übersetzung nicht (einfach) geändert werden.

Ein wesentlicher Vorteil des erfindungsgemäßen Antriebs gegenüber anderen alternierenden Antrieben besteht darin, daß die Antriebskennlinie und gegebenenfalls die Übersetzung geändert werden können.

Bei den drei beschriebenen Ausführungsformen des erfindungsgemäßen alternierenden Antriebs wird die Kreisbewegung der von dem Radfahrer um die Pedalachse 16 herum angetriebenen Pedale 21 in eine alternierende Schwingbewegung der Schwingen 26, 27 verwandelt. Bei der ersten Ausführungsform wurde die Umwandlung durch die an beiden Seiten gelenkig eingefaßte Ziehstange 23 ermöglicht. Bei der zweiten Ausführungsform wurden die als Kulisse ausgebildeten Schwingen von den durch sie geführten, mit dem Knieteil des Pedalhebels verbundenan Lagern angetrieben, bei der dritten Ausführungsform wurden die an den Schwingen befestigten Lager von der in den Exzenterscheiben ausgebildeten geschlossenen Nuten geführt.

Die Pedalumdrehung-Radumdrehungs-Kennlinie kann am einfachsten bei der dritten Ausführungsform geändert werden, es ist zureichend, die Form der Nut und den Ort der Drehachse zu ändern.

## Patentansprüche

1. Alternierender Antrieb für Fahrräder oder andere durch menschliche Kraft mit Hilfe von Pedalen angetriebene Fahrzeuge, der zwei um eine am Rahmen des Fahrrades bzw. Fahrzeuges befestigte Pedalachse herum auf einer Kreisbahn bewegliche, sich gegenüberstehende Pedale aufweist, ferner mit zwei um eine am Rahmen befestigte Hilfsachse herum innerhalb eines vorgegebenen Schwingwinkelbereiches auslenkbaren Schwingen ausgerüstet ist, zwischen den Schwingen und den Pedalen eine die Kreisbewegung in eine alternierende Schwingbewegung mit gegeneinander um eine halbe Schwingungsperiode verschobenen Phasen umwandelnde Mitnehmerverbindung besteht, auf der Achse des angetriebenen Rades des Fahrrades bzw. Fahrzeuges an beiden Seiten je ein Freilaufmechanismus angeordnet ist, deren Verriegelungsrichtung einander entgegengesetzt ist, und die Freilaufmechanismen über voneinander unabhängige Ziehelemente mit den einzelnen Schwingen verbunden sind, **dadurch gekennzeichnet**, daß der zwischen der Hilfsachse (25; 25a, 25b) und dem Angriffspunkt der Mitnehmerverbindung an den Schwingen (26, 27; 26a, 27a; 26b, 27b) bestimmte, dem Antriebsmoment angesetzte Abschnitt der einzelnen Schwingen (26, 27; 26a, 27a; 26b, 27b) in der Mitte des erwähnten Schwingwinkelbereiches naher zur Vertikalals zur Horizontalrichtung steht, wodurch die Ziehelemente (29; 82, 83) bei dem erwähnten Schwingbewegung im wesentlichen in der Horizontalrichtung bewegt werden, daß nur auf Zugbelastung beanspruchte, biegsame Ziehelemente (29; 82, 83) aufweist, wobei die Freilaufmechanismen (56, 57) je eine Seiltrommel (59) enthalten und ein Bereich der einzelnen Ziehelemente (29; 82, 83) zur Kraftübertragung an der entsprechenden Seiltrommel (59) aufgewickelt sind.

2. Antrieb nach Anspruch 1, **dadurch gekennzeichnet**, daß zwischen der Pedalachse (16; 16a) und dem Pedal (21) zwei mittels eines Achsenstumpfes starr miteinander verbundene, miteinander einen Winkel einschließende Stäbe (19a, 20a) vorgesehen sind, die Schwingen (26a, 27a) in ihrer Längsrichtung eine längliche innere Öffnung (80) aufweisen und der die beiden Stäbe (19a, 20a) des Pedals (21) verbindende Achsenstumpf unmittelbar oder über ein Lager (81) in der inneren Öffnung geführt ist.

3. Antrieb nach Anspruch 1, **dadurch gekennzeichnet**, daß die Pedale (21a, 21b) jeweils eine, aneinander spiegelsymmetrisch angeordnete Exzenterscheiben (102, 103) mit geschlossener Konturfläche enthalten und die Pedalachse (16) durch die Exzenterscheiben (102, 103) hindurchführt und damit starr verbunden ist, und die Schwingen (26b, 27b) durch eine Zwangsverbindung durch die Konturflächen bewegt werden.

4. Antrieb nach Anspruch 3, **dadurch gekennzeichnet**, daß auf den Exzenterscheiben (102, 103) die Konturflächen bestimmenden Nuten (106, 107) ausgebildet sind, und in die Nuten (106, 107) eingepaßte Führungselemente eingreifen.

5. Antrieb nach Anspruch 4, **dadurch gekennzeichnet**, daß die locker in die Nuten (106, 107) eingepaßten, das Führungselement bildenden Lager (104, 105) an einem mittleren Teil der Schwingen (26b, 27b) befestigt sind.

6. Antrieb nach einem der Ansprüche 3-5, **dadurch gekennzeichnet**, daß die geschlossene Konturfläche ein der Charakteristik eines zwischen der Pedalachse (16) und der Hinterachse (50) befindlichen Kettentriebes mit kreisförmigem Kettenrad entsprechende Kennlinie gewährleistendes Konturprofil (108) aufweist.

7. Antrieb nach einem der Ansprüche 3-5, **dadurch gekennzeichnet**, daß die geschlossene Konturfläche ein der Charakteristik eines zwischen der Pedalachse (16) und der Hinterachse (50) befindlichen Kettentriebes mit abgerundet rhombusförmigem Kettenrad entsprechende Kennlinie gewährleistendes Konturprofil (109) aufweist.

8. Antrieb nach einem der Ansprüche 1-7, **dadurch gekennzeichnet**, daß an den Schwingen (26, 27; 26a, 27a; 26b, 27b) für das Ziehelement (29; 82, 83) ein Befestigungsort ausgebildet ist, dessen Entfernung von der Hilfsachse (25; 25a, 25b) zwischen zwei Extremwerten eingestellt werden kann.

9. Antrieb nach einem der Ansprüche 1-8, **dadurch gekennzeichnet**, daß die Ziehelemente (29; 82, 83) und die Freilaufmechanismen (56, 57) enthaltende Teilkonstruktion mit einem die Ziehelemente (29; 82, 83) spannenden Spannanordnung versehen ist.

10. Antrieb nach einem der Ansprüche 1-9, **dadurch gekennzeichnet**, daß die Schwingen (26, 27; 26a, 27a; 26b, 27b) über eine Gelenkverbindung mit starren hinteren Ziehstangen (82, 83) verbunden sind, und je ein Punkt der Ziehstangen (82, 83), der sich während der alternierenden Bewegung vor beziehungsweise hinter der Achse (50) des Hinterrades (12) befindet, mit einer durch die Freilaufmechanismen hindurchgezogenen Schnur (87, 90) in Verbindung steht.

11. Antrieb nach Anspruch 10, **dadurch gekennzeichnet**, daß der äußere Mantel der Freilaufmechanismen als Seiltrommel (84) ausgebildet und an einem vor der Hinterachse befindlichen Punkt mittels einer Schnureinspannkonstruktion (86) das eine Ende einer Ziehschnur (87) befestigt ist, deren anderes Ende mit der Seiltrommel (84) in Verbindung steht, bei dem hinter der Hinterachse befindlichen Befestigungspunkt eine Seilspannkonstruktion (89) angeordnet ist, die mit dem einen Ende einer Spannschnur (90) verbunden ist, deren anderes Ende an der Seiltrommel (84) befestigt ist.

## Claims

1. Alternating drive for bicycles or other vehicles driven by human force via pedals, comprising a pair of oppositely located pedals moveable along a circular path around a pedal shaft attached to the frame of the bicycle or vehicle, respectively; a pair of swinging arms pivoted around an auxiliary shaft attached to the frame and allowing a swinging movement within a predetermined angular range; and cam connections arranged between the swinging arms and the pedals for converting the circular movement into an alternating swinging movement with a phase difference of a half swinging period; wherein at both sides of the driven axis of the bicycle or vehicle, respectively, respective free-wheel mechanisms are arranged with opposite locking directions, and the free-wheel mechanisms are connected with the respective swinging arms by means of independent pulling elements, **characterized** in that respective sections of the swinging arms (26, 27; 26a, 27a; 26b, 27b) which are exposed to the driving torque and being defined between the auxiliary shaft (25; 25a, 25b) and the connection point of said cam connections with the swinging arms (26, 27; 26a, 27a; 26b, 27b) take positions in the middle of said angular range that are closer to the vertical than to the horizontal direction, whereby during said swinging movement said pulling elements (29; 82, 83) being moved substantially in horizontal direction, said pulling elements (29; 82, 83) being flexible and are exposed only to pulling forces, wherein said free-wheel mechanisms (56, 57) comprising respective wire drums (59), and wherein respective sections of said pulling elements (29; 82, 83) being wound around the associated one of said wire drums (59) for transmitting forces thereto.

2. The alternating drive as claimed in claim 1, **characterized** in that between the pedal shaft (16; 16a) and the pedal (21) a pair of shanks (19a, 20a) are arranged interconnected rigidly by means of a short shaft, said shanks (19a, 20a) being arranged in an angle to each other, the swinging arms (26a, 27a) comprising in their longitudinal direction respective elongated internal openings (80), and said short shaft connecting said shanks (19a, 20a) being guided directly or by means of a bearing (81) in said openings (80).

3. The alternating drive as claimed in claim 1, **characterized** in that said pedals (21a, 21b) comprising respective eccentric discs (102, 103) having closed contour surfaces and being positioned in a mirror symmetrical arrangement, and said pedal shaft (16) extending through said eccentric discs (102, 103) and being fixed thereto, and said swinging arms (26b, 27b) being forced for said swinging movement by said contour surfaces.

4. The alternating drive as claimed in claim 3, **characterized** in that said eccentric discs (102, 103) comprising slots (106, 107) defining said contour surfaces, and guiding elements being fitted in said slots (106, 107).

5. The alternating drive as claimed in claim 4, **characterized** in that said guiding elements are bearings (104, 105) loosely fitted in said slots (106, 107) and being fixed to a central section of said swinging arms (26b, 27b).

6. The alternating drive as claimed in any of claims 3 to 5, **characterized** in that said closed contour surfaces having shape defining a driving characteristic that corresponds to the characteristic of a conventional chain-drive effective between the pedal shaft (16) and the rear shaft (50) driven by means of a circular gear.

7. The alternating drive as claimed in any of claims 3 to 5, **characterized** in that said closed contour surfaces having shape defining a driving characteristic that corresponds to the characteristic of a conventional chain-drive effective between the pedal shaft (16) and the rear shaft (50) driven by means of a rhombus gear with rounded profile.

8. The alternating drive as claimed in any of claims 1 to 7, **characterized** in that said swinging arms (26, 27, 26a, 27a; 26b, 27b) comprising respective attachment places for said pulling elements (29; 82, 83), wherein the distance between said attachment places and said auxiliary shaft (25; 25a, 25b) can be adjusted between two extreme values.

9. The alternating drive as claimed in any of claims 1 to 8, **characterized** in that a sub-assembly comprising said pulling elements (29; 82, 83) and said free-wheel mechanisms (56, 57) comprises biasing means for keeping said pulling elements (29, 82, 83) biased.

10. The alternating drive as claimed in any of claims 1 to 9, **characterized** in that said swinging arms (26, 27; 26a, 27a; 26b, 27b) are coupled via respective pivoted connections with rigid rear pulling bars (82, 83) and respective points of the pulling bars (82, 83) located during the reciprocating movement thereof before and behind the rear shaft (50) of the rear wheel (12) being connected to wire means (87, 90) wound around said free-wheel mechanisms (55, 56) to rotate forward and backward said mechanisms during said movement.

11. The alternating drive as claimed in claim 10, **characterized** in that the outer sides of said free-wheel mechanisms (55, 56) being designed as wire drums (84) and said points of the pulling bars (82, 83) located in front of the rear shaft (50) being coupled by means of respective biasing elements (86) to first ends of respective pulling wires (87) and the other ends of said wires (87) being coupled to said wire drums (84) and said attachment points located behind the rear shaft (50) being coupled through respective wire biasing mechanisms (89) to first ends of biasing wires (90) having other ends coupled to said wire drums (84).

## Revendications

1. Entraînement alternant pour bicyclettes ou pour autres véhicules entraînés par la force humaine à l'aide de pédales, qui présente deux pédales opposées pouvant se déplacer sur une trajectoire circulaire autour d'un axe de pédale fixé au cadre de la bicyclette respectivement du véhicule, qui est de plus équipé de deux manivelles oscillantes pouvant pivoter à l'intérieur d'une plage d'angle d'oscillation prédéterminée autour d'un axe auxiliaire fixé au cadre, il y a entre les manivelles et les pédales une liaison d'entraînement convertissant le mouvement circulaire en un mouvement d'oscillation alternant avec des phases décalées l'une par rapport à l'autre d'une demi période d'oscillation, un mécanisme de roue libre est disposé respectivement de chaque côté sur l'axe de la roue entraînée de la bicyclette respectivement du véhicule, dont la direction de verrouillage est opposée, et les mécanismes de roue libre sont liés par l'intermédiaire d'éléments de traction indépendants l'un de l'autre aux manivelles individuelles, caractérisé en ce que la portion des manivelles individuelles (26, 27; 26a, 27a; 26b, 27b), positionnée entre l'axe auxiliaire (25; 25a, 25b) et le point d'attaque de la liaison d'entraînement aux manivelles (26, 27; 26a, 27a; 26b, 27b) et exposée au couple d'entraînement, quand elle se trouve au milieu de la plage d'oscillation mentionnée, est plus proche de la direction verticale que de la direction horizontale, les éléments de traction (29; 82, 83) étant ainsi mus lors du mouvement d'oscillation mentionné principalement dans la direction horizontale, que des éléments de traction (29; 82, 83) flexibles sollicités uniquement en traction sont prevus, les mécanismes de roue libre (56, 57) contenant chacun un tambour de câble (59) et une zone des éléments de traction individuels (29; 82, 83) étant enroulés pour la transmission de force sur le tambour de câble (59) correspondant.

2. Entraînement selon la revendication 1, caractérisé en ce qu'entre l'axe de pédale (16; 16a) et la pédale (21) sont prévues deux barres (19a, 20a) reliées de façon rigide l'une à l'autre au moyen d'un tronc d'axe et délimitant entre elles un angle, les manivelles (26a, 27a) présentent dans leur direction longitudinale une ouverture (80) intérieure longitudinale et le tronc d'arbre reliant les deux barres (19a, 20a) de la pédale (21) est guidé directement ou par l'intermédiaire d'un palier (81) dans l'ouverture intérieure.

3. Entraînement selon la revendication 1, caractérisé en ce que les pédales (21a, 21b) contiennent chacun l'un de disques d'excentrique (102, 103) disposés symétriquement en symétrie de miroir l'un par rapport à l'autre présentant des surfaces profilées fermées et l'axe des pédales (16) traverse les disques d'excentrique (102, 103) et y est relié de façon rigide et les manivelles (26b, 27b) sont mues par une liaison forcée par les surfaces profilées.

4. Entraînement selon la revendication 3, caractérisé en ce que sur les disques d'excentrique (102, 103) sont formées des rainures (106, 107) déterminant les surfaces profilées et des éléments de guidage adaptés s'engagent dans les rainures (106, 107).

5. Entraînement selon la revendication 4, caractérisé en ce que les paliers (104, 105) adaptés avec jeu dans les rainures (106, 107), formant l'élément de guidage sont fixés à une partie médiane des manivelles (26b, 27b).

6. Entraînement selon l'une quelconque des revendications 3-5, caractérisé en ce que la surface profilée fermée présente un profil de contour (108) garantissant une courbe caractéristique correspondant à la caractéristique d'une transmission par chaînes située entre l'axe de pédale (16) et l'axe arrière (50), à roue à chaînes circulaire.

7. Entraînement selon l'une quelconque des revendications 3-5, caractérisé en ce que la surface profilée fermée présente un profil de contour (109) garantissant une courbe caractéristique correspondant à la caractéristique d'une transmission par chaînes située entre l'axe de pédale (16) et l'axe arrière (50), à roue à chaînes en forme de losange arrondi.

8. Entraînement selon l'une quelconque des revendications 1-7, caractérisé en ce que sur les manivelles (26, 27; 26a, 27a; 26b, 27b) un emplacement de fixation est formé pour l'élément de traction (29; 82, 83), dont l'éloignement de l'axe auxiliaire (25; 25a, 25b) peut être réglé entre deux valeurs extrêmes.

9. Entraînement selon l'une quelconque des revendications 1-8, caractérisé en ce que les éléments de traction (29; 82, 83) et la construction partielle contenant des mécanismes de roue libre (56, 57) est pourvu d'un ensemble de serrage serrant les éléments de traction (29; 82, 83).

10. Entraînement selon l'une quelconque des revendications 1-9, caractérisé en ce que les manivelles (26, 27; 26a, 27a; 26b, 27b) sont reliées par l'intermédiaire d'un joint articulé à des barres de traction arrières rigides (82, 83) et un des points des barres de traction (82, 83) qui se trouve pendant le mouvement alternant devant respectivement derrière l'axe (50) de la roue arrière (12), est en liaison avec un cordon (87, 90) tiré à travers les mécanismes de roue libre.

11. Entraînement selon la revendication 10, caractérisé en ce que la surface extérieure des mécanismes de roue libre a la forme d'un tambour de câble (84) et l'une des extrémité d'un cordon de traction (87) est fixée à un point situé devant l'axe arrière au moyen d'une construction de serrage de cordon (86), dont l'autre extrémité est en liaison avec le tambour de câble (84), au point de fixation se trouvant derrière l'axe arrière est fixée une construction de serrage de câble (89), qui est reliée à l'une des extrémités d'un cordon de serrage (90), dont l'autre extrémité est fixée au tambour de câble (84).
